# FASCICULE DE BREVET EUROPEEN

(11) **EP 2 310 267 B1**
(45) Date de publication et mention de la délivrance du brevet: **17.09.2014**
(21) Numéro de dépôt: 09784396.5
(22) Date de dépôt: 02.06.2009
(51) Int. Cl.: B64D 29/00, B64D 15/12, B64D 33/02, F02C 7/045, F02C 7/047, H05B 3/28

(54) **PROCEDE DE FABRICATION D'UN ENSEMBLE DE DEGIVRAGE SUR UN PANNEAU D'UNE NACELLE ET LEDIT PANNEAU**
VERFAHREN ZUR HERSTELLUNG EINES ENTEISUNGSSYSTEMS AUF EINER TRIEBWERKSVERKLEIDUNG UND BESAGTE VERKLEIDUNG
METHOD FOR MAKING A DEICING SYSTEM ON A NACELLE PANEL AND SAID PANEL

(30) Priorité: 04.08.2008 FR 0804428
(43) Date de publication de la demande: 20.04.2011
(73) Titulaire: Aircelle, 76700 Gonfreville l'Orcher (FR)
(72) Inventeur: VAUCHEL, Guy, Bernard, F-76600 Le Havre (FR); GEROME, Marc, F-76600 Le Havre (FR); LEMAINS, Laurence, F-76700 St Laurent de Brevedent (FR)
(74) Mandataire: Gaillarde, Frédéric F. Ch.
(86) Numéro de dépôt international: PCT/FR2009/051032
(87) Numéro de publication internationale: WO 2010/015758

(56) Documents cités:
- EP-A- 1 495 963
- EP-A- 1 715 159
- EP-A- 1 845 018
- EP-A- 1 925 551
- FR-A- 2 898 868

## Description

L'invention concerne un procédé de fabrication d'un ensemble de dégivrage sur un panneau d'une nacelle.

Un avion est propulsé par un ou plusieurs ensembles propulsifs comprenant chacun un turbomoteur logé dans une nacelle tubulaire. Chaque ensemble propulsif est rattaché à un aéronef par un mât situé sous une aile ou au niveau du fuselage.

Une nacelle présente généralement une structure comprenant une entrée d'air en amont du moteur et une section médiane apte à entourer une soufflante du turbomoteur, une section aval abritant des moyens d'inversion de poussée et apte à entourer la chambre de combustion du turbomoteur. La nacelle est terminée par une tuyère d'éjection dont la sortie est située en aval du turbomoteur.

L'entrée d'air comprend, d'une part, une lèvre d'entrée d'air adaptée pour permettre la captation optimale vers le turbomoteur de l'air nécessaire à l'alimentation de la soufflante et des compresseurs internes du turbomoteur, et d'autre part, une structure aval, sur laquelle est rapportée la lèvre d'entrée d'air, destinée à canaliser convenablement l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle, notamment au niveau de la surface externe de la lèvre d'entrée d'air. La présence de glace ou de givre modifie les propriétés aérodynamiques ce qui perturbe l'acheminement de l'air vers la soufflante.

Afin de remédier à ce problème, il est connu par exemple du document EP 1 925 551 - qui est considéré comme étant l'état de la technique le plus proche - d'intégrer l'ensemble de dégivrage dans une peau composite que l'on perce ensuite afin d'obtenir au moins un trou de fixation ou une multitude de trous acoustiques. Le panneau percé d'une multitude de trous acoustiques forme un panneau acoustique apte à absorber les bruits générés par le fonctionnement du turbomoteur.

Cependant, l'ensemble de dégivrage n'est généralement pas visible lors du perçage ce qui entraîne un risque important de percer les éléments résistifs. Un tel endommagement difficilement détectable a pour conséquence de rompre la continuité des performances de dégivrage.

Un but de la présente invention est de fournir un panneau d'une nacelle comportant au moins un trou et un ensemble de dégivrage efficace, simple à mettre en oeuvre et assurant un dégivrage continu.

A cet effet, l'invention a pour objet un procédé de fabrication d'un ensemble de dégivrage sur un panneau d'une nacelle telle que décrite par les caractéristiques de la revendication 1.

Le procédé selon l'invention empêche que les éléments résistifs soient percés du fait que le réseau d'éléments résistifs est monté autour du ou des trous de fixation ou acoustiques de la peau externe préalablement formés. Le positionnement du réseau est réalisé de manière précise par une bonne visualisation desdits trous. De ce fait, de manière avantageuse, on évite également d'obstruer ces derniers.

Par ailleurs, la précision du positionnement du réseau permet d'envisager une réparation plus aisée en cas de dommage du panneau. Il est en effet possible de remplacer la partie endommagée du panneau et de reformer la partie du réseau correspondante.

Le procédé de l'invention rend possible de réaliser un réseau d'éléments résistifs présentant une multitude de motifs adaptés en fonction du besoin.

Selon d'autres caractéristiques de l'invention, la structure de l'invention comporte l'une ou plusieurs des caractéristiques optionnelles suivantes considérées seules ou selon toutes les combinaisons possibles :
- le panneau comporte en outre une structure en nid d'abeille ce qui permet d'obtenir un panneau structurant plus résistant aux efforts mécaniques ;
- la peau externe comporte des trous acoustiques, le procédé de l'invention permettant de ne pas limiter les performances acoustiques du panneau en obstruant les trous acoustiques ;
- entre l'étape A et l'étape B, on forme une rainure sur la peau externe par un moyen de rainurage pour recevoir les éléments résistifs ce qui permet d'intégrer des éléments résistifs qui présentent une épaisseur interférant avec les performances aéronautiques du panneau de l'invention;
- l'épaisseur de la rainure est supérieure ou égale à l'épaisseur des éléments résistifs ce qui permet d'éviter que les éléments résistifs dépassent de la rainure ;
- le rainurage est réalisé par enlèvement de matière ce qui permet d'assurer un bon rainurage;
- la peau externe comporte dans son épaisseur un treillis métallique ce qui permet d'assurer une surface aérodynamique efficace;
- dans l'étape C, on utilise un revêtement de surface perforé ou tressé ce qui permet de ne pas interférer avec les performaces acoustiques du panneau acoustique;
- dans l'étape C, on utilise comme revêtement de surface un treillis métallique ce qui permet d'obtenir une bonne résistance à l'érosion ;
- les étapes A et B sont réalisées simultanément.

L'invention sera davantage comprise à la lecture de la description non limitative qui va suivre, faite en référence aux figures ci-annexées.
- la figure 1 est une coupe schématique transversale d'une nacelle de l'invention entourant un turbomoteur ;
- la figure 2 est une coupe transversale schématique d'une lèvre d'entrée d'air de l'invention ;
- les figure 3 et 4 sont des vues en perspective partielle d'un ensemble de dégivrage à l'issue de l'étape A du procédé de l'invention ;
- les figures 5a et 5b sont des vues en perspective partielle d'un ensemble de dégivrage à l'issue de variantes de l'étape A du procédé de l'invention de la figure 4 ;
- les figures 6a à 6c sont des vues en perspective partielles de l'ensemble de dégivrage à l'issue d'une étape comprise entre l'étape A et l'étape B du précédé selon l'invention ;
- les figures 7a à 7d sont des vues en perspective partielles de l'ensemble de dégivrage à l'issue de l'étape B ;
- la figure 8 est une vue en perspective partielle de l'ensemble de dégivrage à l'issue de l'étape C.

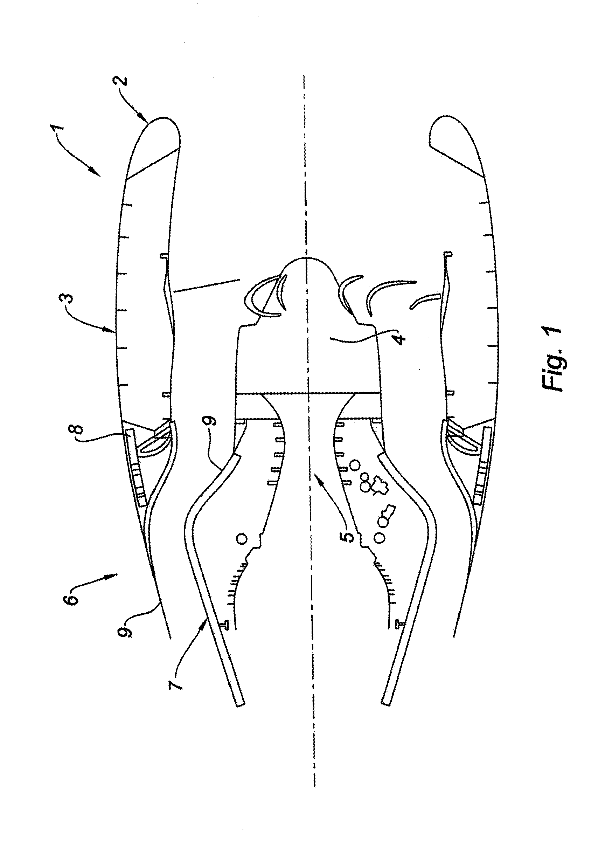

Comme représenté à la figure 1, une nacelle 1 selon l'invention comprend une lèvre d'entrée d'air 2, une structure médiane 3 entourant une soufflante 4 d'un turbomoteur 5 et un ensemble aval 6. L'ensemble aval 6 est constitué d'une structure interne fixe 7 (IFS) entourant la partie amont du turbomoteur 5, d'une structure externe fixe 8 (OFS) et d'un capot mobile 9 comportant des moyens d'inversion de poussée.

La nacelle 1 selon l'invention présente des éléments, dont la lèvre d'entrée d'air 2, susceptibles d'être recouverts de givre ou de glace ce qui pénalise la performance de l'aéronef. L'ensemble de dégivrage de la présente invention permet l'élimination de givre ou de cette glace sur ces éléments et en particulier sur la lèvre d'entrée d'air 2. Lesdits éléments peuvent présenter des surfaces de toutes formes. A titre d'exemple, on peut citer la présence de dégivrage aux abords des fixations de panneaux d'accès ou bien la présence de dégivrage aux abords de trous de drainage d'éléments de la nacelle 1.

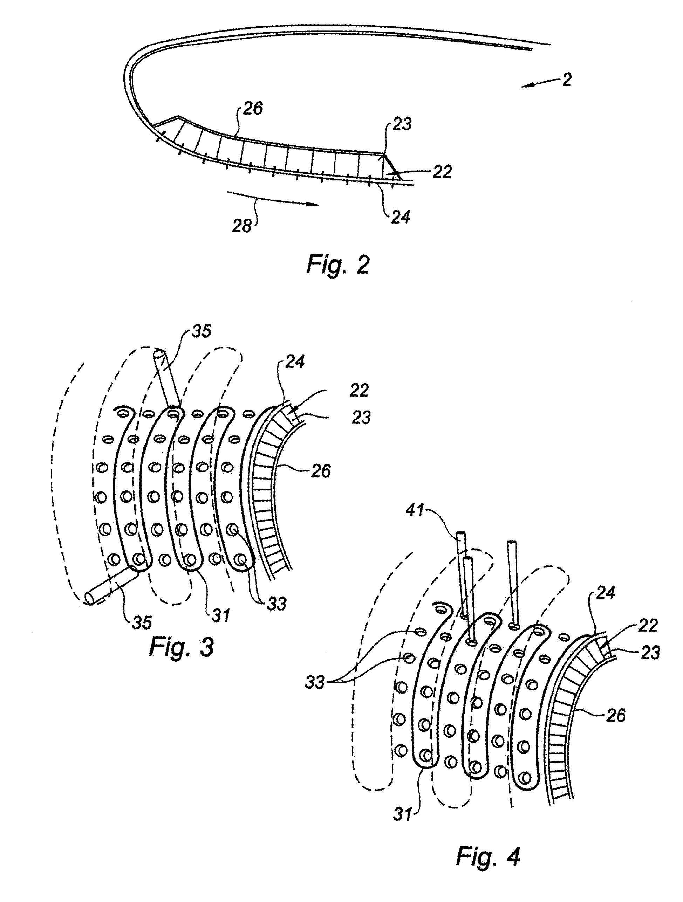

Selon le mode de réalisation représenté sur la figure 2, la lèvre d'entrée d'air 2 présente un panneau comprenant un ensemble de dégivrage obtenu par le procédé selon l'invention. Dans ce cas-là, le panneau est un panneau acoustique 22 comportant une structure d'absorption acoustique 23, notamment une structure en nid d'abeille, sur laquelle est fixée une peau interne 26 pleine et une peau externe 24 perforée de trous acoustiques. La peau externe 24 est destinée à être au contact avec le flux d'air froid 28.

Le panneau employé dans le procédé de l'invention n'est pas limité à un panneau acoustique et peut également être un panneau non acoustique comportant des trous de fixation destinés permettre la fixation dudit panneau sur un élément de la nacelle, notamment la lèvre d'entrée d'air 2. Le panneau peut comporter en supplément d'une peau externe et d'une peau interne une structure en nid d'abeille permettant d'obtenir un panneau structural apte à mieux résister aux efforts mécaniques. Le panneau peut également ne pas comporter de telles structures en nid d'abeile et uniquement une peau externe et interne qui peuvent être sous la forme d'une couche unique.

A titre d'exemple de tels panneaux, on peut citer des panneaux inférieurs aérodynamiques comportant au moins un trou de drainage actif dans toutes les phases de vol de l'aéronef.

L'ensemble de dégivrage est obtenu selon le procédé de l'invention comprenant les étapes où :
A. on positionne un réseau d'éléments résistifs sur la peau externe par rapport au(x) trou(s), voire autour du ou des trous, notamment de fixation ou acoustiques, par un moyen de positionnement,
B. on pose le réseau d'éléments résistifs par un moyen de pose sur l'emplacement déterminé à l'étape A pour former l'ensemble de dégivrage,
C. on applique un revêtement de surface sur l'ensemble de dégivrage ainsi formé.

Le procédé de l'invention permet un meilleur positionnement et une meilleure visualisation du réseau autour desdits trous de la peau externe 24. Le perçage des éléments résistifs et toute rupture de continuité dans les performances du dégivrage sont ainsi évités.

De plus, le procédé de l'invention évite de manière avantageuse l'obstruction des trous. Dans le cas d'un panneau acoustique, ill en ressort une meilleure efficacité des performances acoustiques.

Le procédé selon l'invention permet également une réparation plus aisée en cas de dommage. En effet, la partie endommagée du réseau d'éléments résistifs est remplacée de manière simple à l'oeil nu par une partie non endommagée. La partie de réseau endommagée peut alors être repositionnée et remplacée.

Dans le cas d'un paneau acoustique, le procédé de l'invention permet de manière avantageuse d'obtenir une répartition des trous acoustiques sur le panneau acoustique adéquate pour fournir l'absorption acoustique désirée. Il est alors possible d'optimiser l'absorption acoustique et la tenue structurale du panneau acoustique 22.

Comme représenté sur la figure 3, dans l'étape A du procédé de l'invention, on positionne un réseau 31 d'éléments résistifs sur la peau externe 24 par rapport au(x) trou(s) 33 par un moyen de positionnement 35.

Selon un mode de réalisation, préalablement à l'étape A, il est possible de programmer à l'aide d'un ordinateur ou de tout autre moyen connu de l'homme du métier le motif du réseau 31 en fonction de la répartition finale des trous 33 désirée.

Dans le cas où le panneau 22 comporte une multitude de trous 33, le positionnement comprend une étape de détection des trous voisins qui, du fait de la tolérance de fabrication de la peau externe 24, sont décalés par rapport à leur position théorique typiquement déterminée par ordinateur. En effet, le perçage des trous 33 dans la peau externe 24 est effectué par des outils de perçage. Les outils de perçage présentent une erreur de positionnement inhérente ce qui induit un décalage dans le positionnement de ces trous 33 par rapport au positionnement théorique. De plus, la géométrie du panneau 22 peut accentuer l'erreur dans le positionnement desdits trous 33.

Le moyen de positionnement 35 employé dans l'étape A peut être, par exemple, un laser 41 (voir figure 4). Le laser 41 permet d'assurer un positionnement précis des trous 33. Il est également possible de combiner le laser 41 avec d'autres types de moyen de positionnement 35.

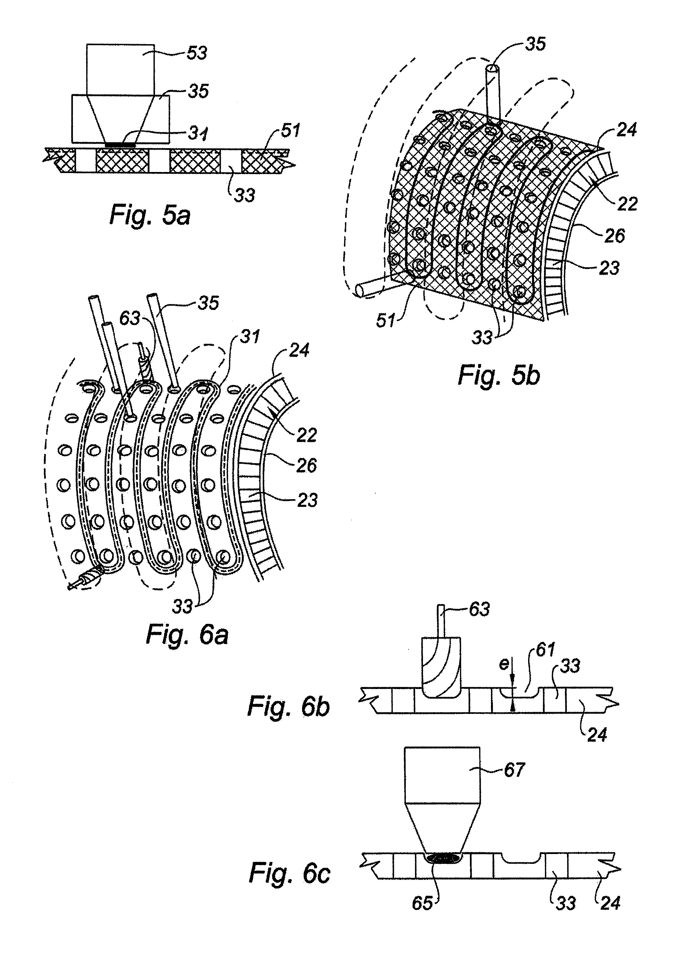

Selon une variante préférée représentée aux figures 5a et 5b, la peau externe 24 comporte dans son épaisseur un treillis métallique 51. Le positionnement est alors assuré, par exemple, par rayons X ou tout autre dispositif adapté connu de l'homme du métier.

Dans l'étape B du procédé de l'invention, on pose le réseau d'éléments résistifs 31 sur l'emplacement déterminé à l'étape A pour former l'ensemble de dégivrage.

La pose du réseau 31 d'éléments résistifs peut se faire par tout moyen de pose connu et adapté de l'homme du métier. A titre d'exemple, on peut citer une pose par buse de substrat ou des éléments résistifs filamentaires. Il est possible que le dépôt des éléments résistifs se fasse par sérigraphie.

Selon une variante, le moyen de positionnement 35 employé dans l'étape A comporte un moyen de pose 53, comme représenté à la figure 5a. Une telle configuration permet de limiter l'encombrement lors de la pose des réseaux 31.

L'étape A et l'étape B peuvent être successives ou simultanées. Des étapes A et B simultanées permettent de manière avantageuse de gagner de temps lors de la fabrication de l'ensemble de dégivrage.

A titre d'exemple, les éléments résistifs sont sous la forme de substrat chargé d'éléments thermiques, telles que des peintures, sous la forme d'éléments résistifs autocollants, sous la forme d'éléments résistifs fondus sur la peau externe 24 lors de la pose, et/ou sous la forme d'éléments résistifs enrobés enrobés d'une gaine électro isolante électriquement capable sur une face d'adhérer sur la peau externe 24 par collage ou par électrostatique jusqu'à l'installation du revêtement de surface dans une matière autocollante.

Par « autocollant », on entend ici que la matière est apte à adhérer de manière durable sur une surface par contact sans ajout d'élément extérieur.

Par « éléments résistifs fondus », on entend ici que la consistance de tels éléments résistifs est intermédiaire entre le solide et le liquide lors du passage dans une buse par chauffage et collent sur la peau externe en refroidissant.

Dans le mode de réalisation où les éléments résistifs sont enrobés dans une matière autocollante, les éléments résistifs sont isolés électriquement mais pas thermiquement afin de pouvoir procéder au dégivrage de l'élément de la nacelle à dégivrer, notamment de la lèvre d'entrée d'air 2.

Selon un mode de réalisation représenté aux figures 6a à 6c, entre l'étape A et l'étape B, on forme une rainure 61 sur la peau externe 24 par un moyen de rainurage 63 pour recevoir les éléments résistifs 65.

Un tel rainurage permet d'intégrer les éléments résistifs 65 sans empêcher la pose du revêtement de surface dans le cas où les éléments résistifs 65 présentent une épaisseur suffisante pour interférer avec les performances aéronautiques du panneau acoustique 22. Cette configuration permet de conserver la même intégrité et la même résistance structurale dudit panneau 22.

Typiquement, l'épaisseur de la rainure e est supérieure ou égale à l'épaisseur des éléments résistifs 65. De ce fait, de manière avantageuse, on évite qu'une partie des éléments résistifs 65 dépasse au-delà de la surface de la peau externe 24 et, de ce fait, compromette la pose du revêtement de surface.

De manière préférentielle, le rainurage est réalisé par enlèvement de matière ce qui permet d'assurer un bon rainurage. A cet effet, il est possible de réaliser cet enlèvement de manière mécanique, notamment par exemple en fraisage ou meulage. Il est également possible d'employer un moyen chimique pour enlever de la matière et former des rainures.

Lorsque la rainure 61 est formée sur la peau externe 24, on pose par un moyen de pose 67 les éléments résistifs de sorte à former le réseau 31 d'éléments résistifs (voir figure 6b).

Dans le cas où les éléments résistifs 65 sont non isolés, l'épaisseur e de la rainure est supérieure à l'épaisseur du dépôt des éléments résistifs 65. Une telle différence d'épaisseur permet d'appliquer un isolant sur les éléments résistifs 65. L'isolant est typiquement déposé à l'état liquide dans la rainure 61 et sur les éléments résistifs 65 en présentant une surépaisseur par rapport à la surface de la peau externe 24 qui est ensuite éliminée par tout moyen connu de l'homme du métier.

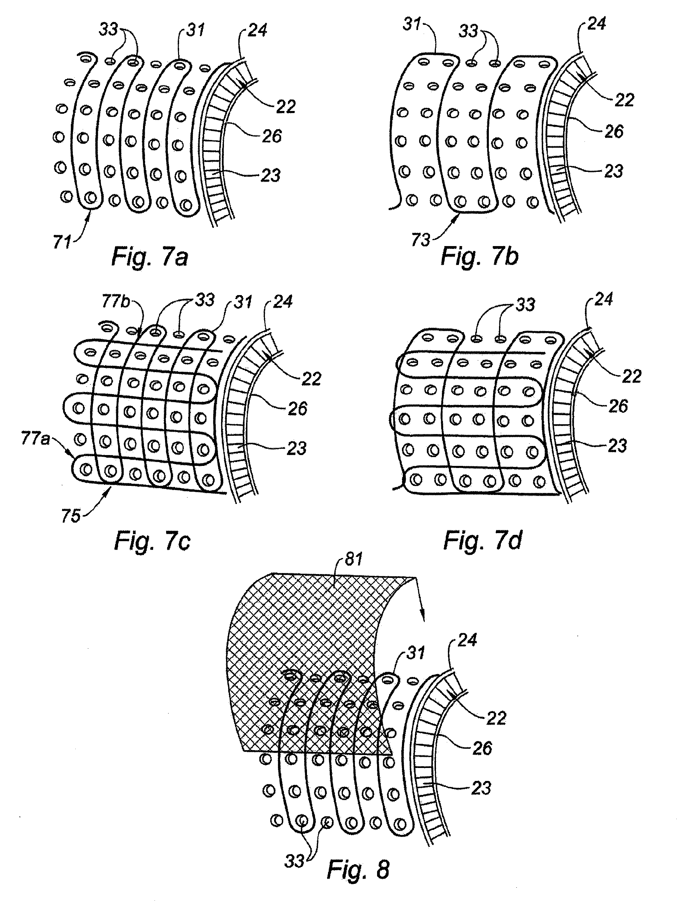

Comme représenté aux figures 7a à 7d, dans le cas de panneau acoustique ou de panneau comprenant une multitude de trous, il est possible de poser le réseau 31 d'éléments résistifs selon des motifs très variés.

Selon un mode de réalisation représenté à la figure 7a, le réseau 31 est posé sur la peau externe 24 selon un motif simple 71 ne contenant qu'une seule rangée de trous 33.

Selon un autre mode de réalisation représenté à la figure 7b, le réseau 31 suit un motif 73 contenant plusieurs rangées trous 33, par exemple deux ou trois rangées.

Selon un mode de réalisation représenté aux figures 7c et 7d, le réseau 31 suit un motif 75 dit « croisé » car il est constitué d'un premier motif 77a contenant une ou plusieurs rangées ainsi qu'un second motif 77b contenant une ou plusieurs rangées disposées de manière sensiblement perpendiculaire au premier motif 77a. Ce mode de réalisation n'est pas limité à deux motifs 77a et 77b mais peut présenter plus de trois motifs.

Les motifs 77a et 77b peuvent également être déposés sur un ou plusieurs niveaux d'éléments résistifs 65, par exemple en empilement en y adjoignant une isolation intermédiaire ou en croisement sur un seul niveau d'éléments résistifs 65.

De plus, il est possible que les motifs 77a et 77b ne présentent pas le même nombre de rangées.

Lorsque le réseau 31 d'éléments résistifs est posé sur la peau externe 24, il est de manière avantageuse possible de contrôler de manière visuelle la pose. Le cas échéant, il est possible de modifier le parcours du réseau 31.

Selon le mode de réalisation représenté à la figure 8, on applique un revêtement de surface 81 sur l'ensemble de dégivrage ainsi obtenu. Le revêtement 81 permet d'assurer une surface aérodynamique efficace en lissant les éventuels défauts de la peau externe 24. Le revêtement de surface 81 est préférentiellement perforé ou tressé ce qui permet de ne pas interférer avec les performaces acoustiques d'un panneau acoustique. Le revêtement de surface 81 est notamment de type treillis métallique ce qui permet d'obtenir une bonne résistance à l'érosion et à la foudre. Selon certaines applications, il est également possible que le treillis ne soit pas métallique, par exemple en résine fluorée.

Le revêtement de surface 81 peut être plus ou moins opaque afin de rendre plus ou moins visible à l'oeil nu les éléments résistifs 65.

Les éléments résistifs 65 étant positionnés sur la peau externe 24, il est ainsi possible de réparer de manière simple le panneau 22 si ce dernier est endommagé. En effet, il est très simple de remplacer la partie endommagée du panneau 22 comportant le ou les trous puis d'appliquer de nouveau la partie manquante du motif du réseau 31 sur les parties endommagées de la peau externe 24. Au-dessus du motif du réseau nouvellement remplacé, on applique un patch du revêtement de surface 81 pour reformer la ligne aérodynamique du panneau 23.

## Revendications

1. Procédé de fabrication d'un ensemble de dégivrage sur un panneau (22) d'une nacelle (1) comprenant une peau externe (24) comportant au moins un trou (33) et une peau interne (26), **caractérisé en ce qu'**il comporte les étapes où :
A. on positionne un réseau (31) d'éléments résistifs (65) sur la peau externe (24) autour du ou des trous (33) par un moyen de positionnement (35),
B. on pose le réseau (31) d'éléments résistifs par un moyen de pose (53 ; 67) sur l'emplacement déterminé à l'étape A pour former l'ensemble de dégivrage,
C. on applique un revêtement de surface (81) sur l'ensemble de dégivrage ainsi formé.

2. Procédé selon la revendication précédente, **caractérisé en ce que** le panneau (22) comporte en outre une structure en nid d'abeille (23).

3. Procédé selon la revendication 1 ou 2, **caractérisé en ce que** la peau externe (24) comporte des trous acoustiques (33).

4. Procédé selon l'une quelconque des revendications précédentes, **caractérisé en ce qu'**entre l'étape A et l'étape B, on forme une rainure (61) sur la peau externe (24) par un moyen de rainurage (63) pour recevoir les éléments résistifs (65).

5. Procédé selon la revendication précédente, **caractérisé en ce que** l'épaisseur (e) de la rainure (61) est supérieure ou égale à l'épaisseur des éléments résistifs (65).

6. Procédé selon la revendication 4 ou 5, **caractérisé en ce que** le rainurage peut être réalisé par enlèvement de matière.

7. Procédé selon l'une quelconque des revendications précédentes, **caractérisé en ce que** la peau externe (24) comporte dans son épaisseur un treillis métallique (51).

8. Procédé selon l'une quelconque des revendications précédentes, **caractérisé en ce que** les étapes A et B sont réalisées simultanément.

9. Procédé selon l'une quelconque des revendications précédentes, **caractérisé en ce que**, dans l'étape C, on utilise un revêtement de surface (81) perforé ou tressé.

10. Procédé selon la revendication précédente, **caractérisé en ce que**, dans l'étape C, on utilise comme revêtement de surface (81) un treillis métallique.

## Patentansprüche

1. Verfahren zur Herstellung einer Enteisungseinheit auf einem Paneel (22) einer Gondel (1), umfassend eine äußere Behäutung (24), umfassend mindestens ein Loch (33) und eine innere Behäutung (26), **dadurch gekennzeichnet, dass** es die Schritte umfasst, in denen:
A. ein Netz (31) von Widerstandselementen (65) auf der äußeren Behäutung (24) um das oder die Löcher (33) mit Hilfe eines Positionierungsmittels (35) angebracht wird,
B. das Netz (31) von Widerstandselementen mit Hilfe eine Ablageelements (53, 67) auf der festgelegen Stelle in Schritt A abgelegt wird, um eine Enteisungseinheit zu bilden,
C. eine Oberflächenabdeckung (81) auf der so gebildeten Enteisungseinheit aufgebracht wird.

2. Verfahren nach dem vorhergehenden Anspruch, **dadurch gekennzeichnet, dass** das Paneel (22) außerdem eine Wabenstruktur (23) umfasst.

3. Verfahren nach Anspruch 1 oder 2, **dadurch gekennzeichnet, dass** die äußere Behäutung (24) Schalllöcher (33) umfasst.

4. Verfahren nach einem der vorhergehenden Ansprüche, **dadurch gekennzeichnet, dass** zwischen Schritt A und Schritt B eine Nut (61) auf der äußeren Behäutung (24) durch eine Nutungsvorrichtung (63) gebildet wird, um die Widerstandselemente (65) aufzunehmen.

5. Verfahren nach dem vorhergehenden Anspruch, **dadurch gekennzeichnet, dass** die Dicke (e) der Nut (61) größer oder gleich der Dicke der Widerstandelemente (65) ist.

6. Verfahren nach Anspruch 4 oder 5, **dadurch gekennzeichnet, dass** die Nutung durch die Entfernung von Material durchgeführt werden kann.

7. Verfahren nach einem der vorhergehenden Ansprüche, **dadurch gekennzeichnet, dass** die äußere Behäutung (24) in ihrer Dicke eine metallisches Gitter (51) umfasst.

8. Verfahren nach einem der vorhergehenden Ansprüche, **dadurch gekennzeichnet, dass** die Schritte A und B gleichzeitig durchgeführt werden.

9. Verfahren nach einem der vorhergehenden Ansprüche, **dadurch gekennzeichnet, dass** in Schritt C eine perforierte oder geflochtene Oberflächenbeschichtung (81) verwendet wird.

10. Verfahren nach dem vorhergehenden Anspruch, **dadurch gekennzeichnet, dass** in Schritt C als Oberflächenbeschichtung (81) ein metallisches Gitter verwendet wird.

## Claims

1. A method for manufacturing a de-icing assembly on a panel (22) of a nacelle (1) comprising an outer skin(24) including at least one hole (33) and an inner skin (26), **characterized in that** it includes the steps wherein:
A. a network (31) of resistive elements (65) is positioned on the outer skin (24) around the hole(s) (33) by a positioning means (35).
B. the network (31) of resistive elements is laid by a laying means (53; 67) on the location determined in step A to form the de-icing assembly.
C. a surface coating (81) is applied on the de-icing assembly thus formed.

2. The method according to the preceding claim, **characterized in that** the panel (22) further includes a honeycomb structure (23).

3. The method according to claim 1 or 2, **characterized in that** the outer skin (24) includes acoustic holes (33).

4. The method according to any one of the preceding claims, **characterized in that** between step A and step B a groove (61) is formed on the outer skin (24) by a grooving means (63) to receive the resistive elements (65).

5. The method according to the preceding claim, **characterized in that** the thickness (e) of the groove (61) is greater than or equal to the thickness of the resistive elements (65).

6. The method according to claim 4 or 5, **characterized in that** the grooving can be carried out by material removal.

7. The method according to any one of the preceding claims, **characterized in that** the outer skin (24) includes in its thickness a wire mesh (51).

8. The method according to any one of the preceding claims, **characterized in that** steps A and B are carried out simultaneously.

9. The method according to any one of the preceding claims, **characterized in that**, in step C, a perforated or braided surface coating (81) is used.

10. The method according to the preceding claim, **characterized in that**, in step C, a wire mesh is used as surface coating (81).
